# EUROPEAN PATENT APPLICATION

(11) **EP 4 664 906 A1**
(43) Date of publication of application: **17.12.2025**
(21) Application number: 24182381.4
(22) Date of filing: 14.06.2024
(51) Int. Cl.: H04N 23/00, H04N 23/50, H04N 17/00

(54) **MULTI-CAMERA SYSTEM**

(71) Applicant: Koninklijke Philips N.V., 5656 AG Eindhoven (NL)
(72) Inventor: VAREKAMP, Christiaan, 5656 AG Eindhoven (NL); SCHIMANOFSKY, Ronald, 5656 AG Eindhoven (NL); WILLEMS, Andreas Martinus Johannes, 5656 AG Eindhoven (NL); YUAN, Zhaorui, 5656 AG Eindhoven (NL)
(74) Representative: Philips Intellectual Property & Standards

(57) **Abstract**

A multi-camera system for mounting to an external device. The multi-camera system comprises a plurality of mounting elements, a plurality of cameras, and a connecting arrangement. Each mounting element is configured to engage with an external device. Each camera is rotatably attached to a respective mounting element. The connecting arrangement is configured to connect the plurality of mounting elements such that a distance between the mounting elements is adjustable.

## Description

### FIELD OF THE INVENTION

The invention relates to the field of multi-camera systems.

### BACKGROUND OF THE INVENTION

Multi-camera systems are used for 3D imaging and 3D video applications, such as volumetric telepresence applications (e.g. videoconferencing, remote collaboration, social gaming, etc.). Multi-camera systems enable a 3D scene to be viewed from different viewing angles and reduce occlusions, thus enabling more texture information to be acquired for the scene, reducing a need for inpainting.

Existing multi-camera systems for volumetric telepresence applications involve one or more cameras integrated in a display device, in order to provide a 3D communication experience.

### SUMMARY OF THE INVENTION

The invention is defined by the claims.

According to examples in accordance with an aspect of the invention, there is provided a multi-camera system, comprising: a plurality of mounting elements, each configured to engage with an external device; a plurality of cameras, each camera being rotatably attached to a respective mounting element; and a connecting arrangement for connecting the mounting elements, wherein the connecting arrangement is configured such that a distance between mounting elements is adjustable.

By adjusting the distance between mounting elements, the multi-camera system may be attached to external devices (e.g. computer monitors, laptops, tablets, mobile phones, lamps, etc.) having a range of different sizes, thus providing a multi-camera system suitable for volumetric telepresence applications that does not require a dedicated display device with integrated cameras.

Further, the flexible nature of this system allows the position/orientation of the cameras to be adjusted for different use cases.

In some examples, the multi-camera system may further comprise a control unit configured to determine a position of each of the plurality of cameras with respect to one another.

Determining the positions of the cameras with respect to one another enables the cameras to be used for 3D imaging/video applications.

In some examples, the control unit is configured to determine the position of each of the plurality of cameras with respect to one another by: receiving, from each of the plurality of cameras, at least one image acquired by the respective camera; and processing the at least one image acquired by each camera to determine the position of each of the plurality of cameras with respect to one another.

In some examples, the at least one image acquired by each camera may comprise a video sequence acquired by each camera.

In some examples, the control unit is further configured to obtain initial position information for the plurality of cameras; and the control unit is configured to determine the position of each of the plurality of cameras with respect to one another by processing the received at least one image acquired by each camera and the initial position information.

In some examples, the connecting arrangement comprises at least one shunt resistor; and the control unit is further configured to: receive a resistance measurement from each shunt resistor; and determine the initial position information based on the resistance measurement received from each shunt resistor.

In some examples, a known spatially varying pattern is provided on, or at a fixed distance with respect to, at least one camera; and the control unit is further configured to: receive, from at least one other camera, an image acquired by the respective camera that captures the known spatially varying pattern; and analyze each image that captures the known spatially varying pattern to determine the initial position information.

Alternatively, the initial estimate of the distances between the cameras may be obtained via user input, or using depth imaging.

In some examples, wherein the control unit is further configured to repeat the determination of the position of each of the plurality of cameras with respect to one another in response to detecting a change in position of at least one of the cameras.

This ensures that the camera positions used to determine depth information and/or synthesis novel views are up-to-date.

In some examples, the multi-camera system further comprises an inertial measurement unit provided on each camera; and the control unit is configured to: receive, from each inertial measurement unit, a signal responsive to motion of the respective camera; and process the received signals to detect any change in position of at least one of the cameras.

Alternatively, the control unit may detect changes in camera position by analyzing video sequences acquired by the cameras or, where the connecting arrangement comprises a shunt resistor, by detecting changes in the resistance measured by the shunt resistor.

In some examples, the control unit is further configured to determine an orientation of each of the plurality of cameras with respect to one another.

The control unit may be configured to determine the orientation of each camera by analyzing imaging data acquired by the cameras. Additionally or alternatively, the multi-camera system may further comprise sensors for determining orientation, and the orientation of each camera may be determined based on data acquired by these sensors.

In some examples, the multi-camera system further comprises, for each camera, a motor configured to rotate the camera with respect to the respective mounting element; and the control unit is configured to control each motor.

In this way, the orientation of each camera may be automatically controlled.

In some examples, the control unit is further configured to: obtain at least one image acquired by each camera; process the at least one image acquired by each camera to identify a position of a feature of interest; and control at least one motor according to the position of the feature of interest.

This enables the cameras to be automatically rotated towards the feature of interest (e.g. a person). In this way, the orientations of the cameras may be adjusted to improve a view of the feature of interest. Further, this allows the cameras to track a moving feature of interest, keeping the feature of interest within the field of view.

In some examples, the connecting arrangement comprises at least one elastic element.

In some examples, the connecting arrangement comprises a pair of slidable arms.

The distance between the mounting elements may therefore be adjusted by sliding the slidable arms towards or away from one another.

The use of slidable arms provides a multi-camera arrangement that is easy to handle and store when not mounted to an external device.

In some examples, the connecting arrangement further comprises at least one rotatable arm, pivotably connected to the pair of slidable arms.

This provides a multi-camera system for mounting cameras on at least three sides of an external device that can be folded away when not mounted to an external device.

In some examples, the multi-camera system may further comprise at least one support element for supporting a camera of the plurality of cameras when the plurality of mounting elements are engaged with an external device.

This improves the stability of the multi-camera system when mounted to an external device.

In some examples, at least one mounting element is configured such that a distance between the camera rotatably attached to the mounting element and a mounting surface of the mounting element configured to engage with an external device is adjustable.

This allows the size of the viewing zone of the multi-camera system to be adjusted.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a multi-camera system, according to an embodiment of the invention;
Fig. 2 illustrates a front view of a multi-camera system according to an embodiment of the invention, mounted to an external device;
Fig. 3 illustrates a side view of the multi-camera system of Fig. 2 mounted to the external device;
Fig. 4 illustrates another multi-camera system, according to an embodiment of the invention;
Fig. 5 illustrates the multi-camera system of Fig. 4, with the third arm rotated away from the second arm; and
Fig. 6 illustrates a rear view of the multi-camera system of Fig. 4 mounted to an external device.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a multi-camera system for mounting to an external device. The multi-camera system comprises a plurality of mounting elements, a plurality of cameras, and a connecting arrangement. Each mounting element is configured to engage with an external device. Each camera is rotatably attached to a respective mounting element. The connecting arrangement is configured to connect the plurality of mounting elements such that a distance between the mounting elements is adjustable.

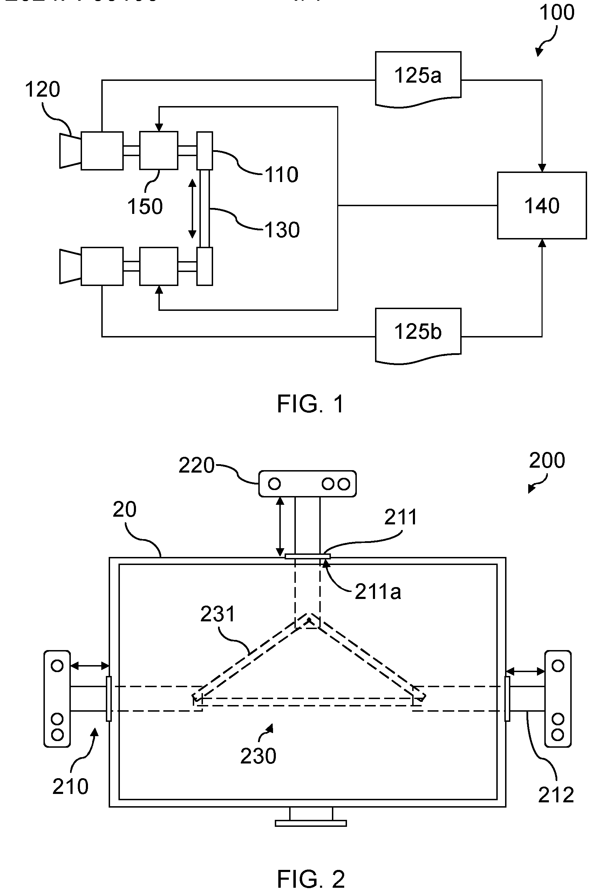

Fig. 1 illustrates a multi-camera system 100, according to an embodiment of the invention. The multi-camera system 100 comprises a plurality of mounting elements 110, a plurality of cameras 120, and a connecting arrangement 130 for connecting the mounting elements. The multi-camera system may further comprise one or more cables/wiring and a cable connection interface (e.g. a USB connector) to provide an electrical connection to each camera, in order to power each camera and/or for data transmission. Alternatively, each camera may configured to be battery-powered and to transmit data wirelessly.

The multi-camera system 100 is configured to be mounted to an external device (not shown in Fig. 1), such as a display (e.g. a computer monitor or a laptop display), a tablet, a mobile phone or a lighting device (e.g. a lighting device for illuminating a person to be captured by the multi-camera system, such as a ring light or lighting panel designed for videotelephony applications).

The plurality of mounting elements 110 are each configured to engage with an external device, as described in more detail below, and each of the plurality of cameras 120 is rotatably attached to a respective mounting element, allowing each camera to be mounted to the external device, while allowing an angle of each camera with respect to the external device to be adjusted according to a desired viewing space. In Fig. 1, the multi-camera system 100 has two cameras; however, the skilled person will readily appreciate that the multi-camera system may comprise a greater number of cameras. The number of cameras included in the multi-camera system may depend on an intended application for the multi-camera system. For instance, for videoconference applications, 2 or 3 cameras would be sufficient to capture volumetric video data of a scene up to a distance of about 2 meters.

The connecting arrangement 130 is configured to connect the mounting elements such that a distance between mounting elements 110 is adjustable. In this way, the multi-camera system 100 may be mounted to external devices of a variety of sizes. Various connecting arrangements are envisaged. For instance, the connecting arrangement may comprise one or more of: at least one elastic element, slidable arms, and/or at least one rotatable arm. The multi-camera system may be mountable to an external device using tension of the connecting arrangement; in some examples, gravity may also contribute to the mounting of the multi-camera system to an external device. Some examples of suitable connecting arrangements are described in more detail below.

In some examples, at least one of the plurality of mounting elements 110 may be configured such that a distance between the camera 120 rotatably attached to the mounting element and a mounting surface of the mounting element configured to engage with an external device is adjustable, as described in more detail below. In this way, the multi-camera system 100 may not only be mounted to external devices of different sizes, but the size of the viewing zone may be adjusted independently of the size of the external device to which the multi-camera system is mounted.

In some examples, the multi-camera system 100 may further comprise at least one support element (not shown in Fig. 1) for supporting one of the plurality of cameras 120 when the plurality of mounting elements are engaged with an external device. The use of at least one support element may be particularly advantageous when the multi-camera system is mounted to a large external device and/or when the position of at least one camera is adjustable with respect to the mounting surface of the respective mounting element and is positioned far from the mounting surface.

In some examples, the multi-camera system 100 further comprises a control unit 140 configured to determine a position (and/or orientation) of each of the plurality of cameras 120 with respect to one another. The control unit may be implemented in one or more devices. In some examples, at least part of the control unit may be provided in an external device to which the multi-camera system is mounted; additionally or alternatively, the control unit may be provided in one or more devices separate to the external device. The control unit may be connected to each camera using a wired connected or a wireless connection.

The control unit 140 may be configured to use any suitable technique to determine the position of each of the plurality of cameras 120 with respect to one another. In some examples, the control unit may be configured to determine the position of each of the plurality of cameras with respect to one another by receiving at least one image 125a, 125b from each of the plurality of cameras, and processing the at least one image acquired by each camera to determine the relative position of each of the plurality of cameras.

For instance, providing that the fields of view of the plurality of cameras 120 have sufficient overlap, the at least one image 125a, 125b acquired by each camera may be processed using a structure-from-motion algorithm to determine the relative position of each of the plurality of cameras.

In some examples, where a desired position and orientation of each camera 120 does not provide sufficient overlap for a structure-from-motion to be used successfully, the cameras may be positioned at/rotated to a position and orientation that provides the desired overlap in fields of view, and at least one image may be acquired from each camera in this position and orientation and processed to determine the relative position of each of the plurality of cameras. Each camera may then be moved and/or rotated as required to achieve a desired position and orientation for the camera; a series of images may be acquired by the respective camera during the movement and/or rotation and processed using a structure-from-motion algorithm to determine the relative position of each of the plurality of cameras once each camera has the desired position and orientation.

In some examples, the control unit 140 may be further configured to obtain initial position information for the cameras, and the determination of the position of each of the plurality of cameras 120 with respect to one another may be further based on the initial position information. The initial position information may be information indicating a scale of the distances between the cameras. The inventors have recognized that the use of existing structure-from-motion techniques alone do not provide the true scale of the distances between the cameras (unless the images 125a, 125b acquired by the cameras capture information that allows the true scale to be determined). While some applications may not need the 3D reconstruction to have the correct scale, others, such as augmented reality application, may need the correct scale. In other words, the initial position information may provide the correct scale required for some applications.

In some examples, the initial position information may comprise a range of distances between the cameras 120 of which the multi-camera system is capable (i.e. from a smallest possible distance between each pair of cameras to a largest possible distance).

In some examples, the initial position information may comprise a more precise initial estimate of the distance between at least one pair of cameras than the range of possible distances. Various methods for obtaining an estimate of the distance between cameras are envisaged.

For instance, in some examples, the connecting arrangement 130 may comprise at least one shunt resistor (not shown in Fig. 1) configured to measure a resistance that is responsive to a distance between cameras, and the initial position information may be obtained by receiving a resistance measurement from each shunt resistor and determining an estimate of the distances between the cameras based on the resistance measurement received from each shunt resistor. In some examples, where the plurality of cameras comprises more than two cameras, more than one shunt resistor may be used, each shunt resistor being configured to measure a resistance responsive to a difference between a different pair of cameras (although, in some application, the distance between one pair of cameras of the plurality of cameras may provide sufficient initial position information).

In some examples, a spatially varying pattern that is known to the control unit 140 (and has a size that is known to the control unit) may be provided on, or at a fixed distance with respect to, at least one of the plurality of cameras 120. The spatially varying pattern may be a 2D spatially varying pattern, such as a QR code, checkerboard pattern, etc. One or more other cameras may be rotated (either manually or, where the camera is rotatable by a motor as described below, by the control unit) to such that the field of view of each of the one or more other cameras includes the spatially varying pattern, and an image that captures the spatially varying pattern may be acquired by each of the one or more other cameras, received by the control unit, and analyzed to determine an estimate of the distance between the camera having the spatially varying pattern and the camera acquiring the image.

In some examples, one or more of the cameras 120 may be capable of depth imaging. The initial position information may be obtained by rotating a first camera capable of depth imaging such that at least one other camera is within the field of view of the first camera; a depth image measuring the distance to the at least one other camera may then be acquired by the first camera, received by the control unit and processed to determine the distance between the first camera and the at least one other camera.

In some examples, the control unit 140 may be configured to receive a user input from a user input device (which may, for example, be an external device to which the multi-camera system is mounted), and the initial position information may be obtained by receiving a user input providing the initial position information. For instance, the initial position information may comprise a size of an external device to which the multi-camera system is mounted or an identification of the external device (from which a size of the external device may be determined).

In some examples, initial position information may be obtained from the external device to which the multi-camera system is mounted. For instance, if the external device is a mobile computing device (e.g. a laptop, a tablet or a mobile phone) and the control unit is (at least partially) implemented in the external device (e.g. as a driver program), the control unit may read the physical dimensions of the device (or the display of the device) using an appropriate API (application program interface) call.

As previously mentioned, the control unit 140 may be configured to determine an orientation of each of the plurality of cameras 120 with respect to one another. For instance, the orientation of each of the plurality of cameras with respect to one another may be determined by processing the at least one image 125a, 125b acquired by each camera. In other words, the processing of the at least one image acquired by each camera may provide a determination of both the relative position and the relative orientation of each camera. The relative orientation of each camera may, for instance, be determined by processing the at least one image acquired by each camera using a structure-from-motion algorithm. In some examples, the at least one image acquired by each camera may be analyzed to determine the orientation of each camera with respect to the scene captured by the cameras (e.g. by identifying one or more features, e.g. a face or person, in each image and determining the relative orientation of the one or more features within each image).

In some examples, the at least one image 125a, 125b acquired by each camera 120 may be acquired with at least one camera in an orientation other than a desired orientation (e.g. to provide an overlap in the fields of view of the cameras that allows a structure-from-motion algorithm to determine the relative positions and orientations). After acquiring the at least one image 125a, 125b, any camera not having a desired orientation may be rotated to the desired orientation. A sequence of images may be acquired during the rotation of the camera to the desired orientation and processed (e.g. using a structure-from-motion algorithm) to determine the orientation of the camera at the desired orientation.

In some examples, the multi-camera system 100 may further comprise, for each camera, one or more sensors for detecting the orientation of the respective camera (e.g. one or more of: at least one accelerometer, at least one gyroscope, at least one magnetometer, etc.); the determination of the orientation of each of the plurality of cameras 120 with respect to one another may then comprise receiving, from each of the one or more sensors, a signal responsive to the orientation of the respective camera, and processing the received signals to determine the relative orientation of each camera.

In some examples, the control unit 140 may be configured to repeat the determination of the position and/or orientation of each of the plurality of cameras 120 with respect to one another, either in response to detecting a change in position and/or orientation of at least one of the cameras or at predetermined intervals.

In some examples, the control unit 140 may be configured to repeat the determination of the position and/or orientation of each of the plurality of cameras at a frame rate of the camera during acquisition of video data by the cameras. In other words, each video frame acquired by the plurality of cameras may be processed (in real-time or close to real-time), for example using a structure-from-motion algorithm, in order to re-determine the relative positions and/or orientations of the cameras. This may be advantageous in live-streamed video applications, as slight changes in the relative positions and/or orientations of the cameras (e.g. as a result of a user touching the multi-camera system or the external device during video acquisition) may be sufficient to cause errors in 3D reconstruction of the video data; re-determining the relative positions and/or orientations at the video frame rate enables up-to-date relative positions and/or orientations to be used for 3D reconstruction of live-streamed video.

As previously mentioned, the control unit 140 may be configured to repeat the determination of the position and/or orientation of each of the plurality of cameras 120 with respect to one another in response to detecting a change in position and/or orientation of at least one of the cameras. Various methods for detecting a change in position and/or orientation of at least one camera are envisaged. For instance, the control unit may be configured to detect a change in position and/or orientation by analyzing video data acquired by each of the plurality of cameras, for example, to identify one or more elements of a scene captured by the video data acquired by each camera as static (e.g. background elements, furniture, etc.) and detect any apparent movement of the one or more static elements in the video data acquired by at least one camera. In some examples, apparent movement of the one or more static elements may not result in a detection of a change in the relative positions and/or orientations if the same apparent movement is observed by all cameras (as, in this case, the apparent movement may be caused by reasons other than camera movement/rotation, such as illumination changes).

In some examples, the multi-camera system 100 may further comprise an inertial measurement unit (not shown in Fig. 1) provided on each camera 120, and the control unit 140 may be configured to receive, from each inertial measurement unit, a signal responsive to motion of the respective camera. The control unit may be configured to detect a change in position and/or orientation of at least one camera by processing the signal received from each inertial measurement unit to detect any change in the signal. A change in position and/or orientation may be detected for a camera in response to detecting a change in the signal responsive to motion of the camera that exceeds a predetermined threshold.

As described above, in some examples, the connecting arrangement 130 may comprise a shunt resistor. In these examples, the control unit 140 may be configured to receive resistance measurements from the shunt resistor either continuously or at predetermined intervals, and detect a change in position of at least one camera by detecting a change in the measured resistance.

In some examples, the multi-camera system 100 may further comprise, for each camera 120, a motor 150 configured to rotate the camera with respect to the respective mounting element 110. The control unit 140 may be configured to control each motor to rotate the respective camera.

In some examples, the control unit may be configured to obtain at least one image acquired by each camera (e.g. the at least one image 125a, 125b acquired by each camera used to determine the relative positions and/or orientations of the cameras and/or at least one further image), and process the obtained at least one image to identify a position of a feature of interest in the scene captured in the images (i.e. a position of the feature of interest relative to the positions of the cameras). The control unit may be configured to control at least one motor according to the position of the feature of interest.

For instance, the control unit may identify, based on the identification of the position of the feature of interest, any desired change in orientation for any of the plurality of cameras, and control the motor for each camera for which a desired change in orientation has been identified in order to provide the desired change in orientation. For example, the control unit may control the motor for any camera for which the feature of interest is only partially within the field of view to rotate the camera such that the feature of interest is fully within the field of view, or the control unit may control the motor for any camera for which the feature of interest is further than a predefined distance from the center of the field of view to center the feature of interest within the field of view.

In some examples, the control unit 140 may be configured to, in response to detecting movement of at least one camera 120, control the motors for the cameras in order to rotate the cameras such that the optical axes of the cameras cross at the point at which the optical axes crossed prior to the detected movement. This allows a user to adjust the positions of the cameras without needing to also manually adjust the orientation of the cameras.

As described above, in some examples, initial position information may be determined by rotating at least one camera to capture a known spatially varying pattern provided on (or at a fixed distance with respect to) another camera. The at least one camera may be rotated by controlling the respective motor to rotate the at least one camera until the known spatially varying pattern is within the field of view of the at least one camera. After an image capturing the known spatially varying pattern has been acquired by the at least one camera, the respective motor may be controlled to rotate the at least one camera to a desired orientation (e.g. an orientation of the camera before the camera was rotated to face the known spatially varying pattern or an orientation identified as a desired orientation by analyzing images acquired by the plurality of cameras).

Additionally or alternatively, the control unit 140 may be further configured to control a user interface to provide guidance to a user of the multi-camera system 100 to adjust a position and/or orientation of at least one camera 120. For instance, the control unit may be configured to process at least one image acquired by each camera to identify any desired change in position and/or orientation for any of the plurality of cameras, and, in response to identifying a desired change in position and/or orientation, control the user interface to provide guidance indicative of the desired change. In some examples, the guidance may relate to an adjustment to the position and/or orientation to the external device to which the multi-camera system is mounted. For instance, if the multi-camera system is mounted to a laptop display, the guidance may relate to a desired adjustment to the angle of the laptop display (e.g. in response to determining, based on images acquired by the plurality of cameras, that the laptop display is angled towards a ceiling).

Fig. 2 illustrates a front view of a multi-camera system 200 according to an embodiment of the invention, mounted to an external device 20. In Fig. 2, the external device is a computer monitor; however, the multi-camera system 200 may be mounted to any suitable device, such as a display (e.g. a laptop display), a tablet, a mobile phone or a lighting device, as described above with respect to Fig. 1. The portion of Fig. 2 illustrated by dashed lines represents a portion of the multi-camera system that is behind the external device, as seen from the front view illustrated in Fig. 2.

The multi-camera system 200 comprises a plurality of mounting elements 210, a plurality of cameras 220, and a connecting arrangement 230. The multi-camera system may further comprise any of (including any combination of) the features described above with respect to Fig. 1 (e.g. a control unit, one or more motors, at least one support element, a shunt resistor, one or more inertial measurement units, etc.).

In Fig. 2, each mounting element 210 comprises a device-engaging element 211, configured to engage with the external device 20, and a rigid slidable element 212, to which a respective one of the plurality of cameras 220 is rotatably attached. The device-engaging element and the rigid slidable element are together configured such that the rigid slidable element is slidable with respect to the device engagement element, enabling the position of the camera attached to the mounting element to be adjusted with respect to a mounting surface 211a of the device-engaging element (i.e. a surface of the device-engaging element in contact with the external device 20 when the mounting element is mounted to the external device), and therefore enabling the position of the camera to be adjusted with respect to the external device 20 to which the multi-camera system 200 is mounted.

The device-engaging element 211 and rigid slidable element 212 may be made from any suitable material, such as a metal or a suitable plastic. For instance, the rigid slidable element may be formed from aluminum.

The connecting arrangement 230 comprises a plurality of elastic elements 231, each configured to connect a respective pair of mounting elements (i.e. a first elastic element connects a first mounting element to a second mounting element, a second elastic element connects the second mounting element to a third mounting element, and a third elastic element connects the third mounting element to the first mounting element). Each elastic elements may, for instance, be an elastic band or a spring. Other suitable elastic elements will be apparent to the skilled person.

The elasticity of each elastic element allows a distance between the mounting elements connected by the elastic element to be adjusted, while also providing a tension that pulls each mounting element towards the external device 20, improving a security of the engagement between each mounting element and the external device. In the arrangement shown in Fig. 2, gravity also contributes to the force on the mounting element at the top of the external device towards the external device.

In Fig. 2, the multi-camera system 200 comprises three cameras. However, as described above, the multi-camera system may comprise a different number of cameras (i.e. two or more cameras). The skilled person would readily appreciate how to adapt the connecting arrangement illustrated in Fig. 2 to a different number of cameras (for instance, in the case of two cameras, a single elastic element may be used).

As described above with reference to Fig. 1, the multi-camera system may further comprise one or more cables/wiring to provide an electrical connection to each camera. Where the connecting arrangement comprises at least one elastic element, the relevant portion of the one or more cables/wiring may be provided within each elastic element, in a coiled or folded (e.g. zig-zagging) arrangement when the respective elastic element is in an unstretched configuration. This reduces a likelihood of damage to the one or more cables/wiring caused by stretching the respective elastic element.

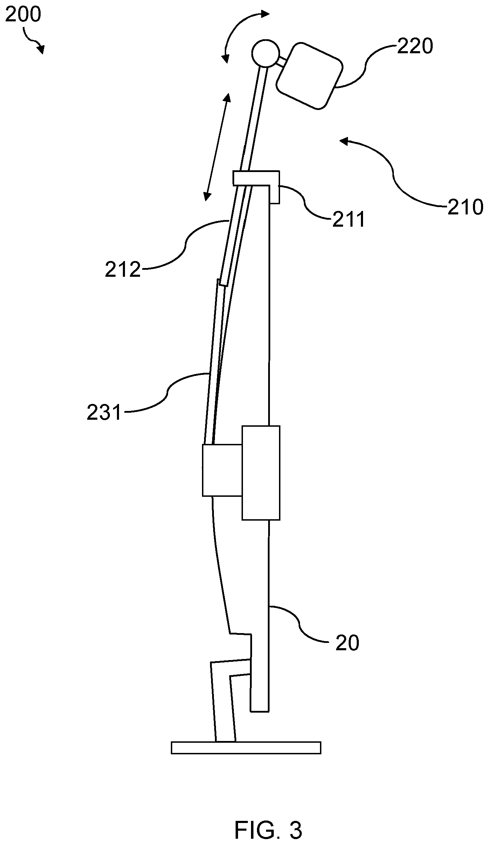

Fig. 3 illustrates a side view of the multi-camera system 200 mounted to the external device 20. Fig. 3 illustrates more clearly the rotatable attachment between the rigid slidable element 212 of the mounting element 210 at the top of the external device and the respective camera 220.

Fig. 3 also illustrates more clearly the engagement between the device-engaging element 211 of the mounting element 210 and the external device 20. The device-engaging element illustrated in Fig. 3 is shaped such that the device-engaging element hooks over an edge of the external device.

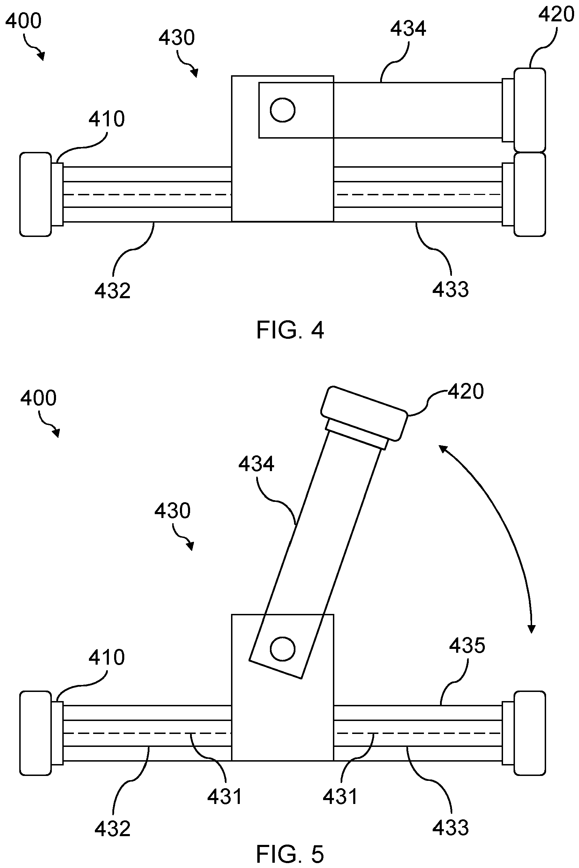

Figs. 4 and 5 illustrate another multi-camera system 400, according to an embodiment of the invention. The multi-camera system 400 comprises a plurality of mounting elements 410, a plurality of cameras 420, each rotatably attached to a respective mounting element, and a connecting arrangement 430. The multi-camera system may further comprise any of (including any combination of) the features described above with respect to Fig. 1 (e.g. a control unit, one or more motors, at least one support element, a shunt resistor, one or more inertial measurement units, etc.). The distance between each camera and a mounting surface of the respective mounting element may be adjustable.

In Figs. 4 and 5, the connecting arrangement 430 comprises a first arm 432, a second arm 433, and a third arm 434. A mounting element 410 is provided on each arm. The first arm and second arm are configured to slide with respect to one another, forming a pair of slidable arms, in order to allow a distance between the mounting element provided on the first arm and the mounting element provided on the second arm to be adjusted. In Fig. 4, the first arm and second arm are each configured to fit within a central housing 435 and to slide with respect to central housing; alternatively, one slidable arm of a pair of slidable arms may be configured to fit within the other slidable arm.

In some examples, the first arm 432 and the second arm 433 are each tensioned using an elastic element 431 (e.g. an elastic band or a spring), configured to bias the first arm and second arm respectively towards the central housing 435. If the central housing is not included, the first arm and the second arm may be tensioned using an elastic element configured to bias the first arm and the second arm towards one another. This tension contributes to the engagement between an external device and the mounting elements provided on the first and second arms when the multi-camera system 400 is mounted to the external device, by pulling the mounting elements towards the external device.

The third arm 434 is a rotatable arm, pivotably connected to the pair of slidable arms. The third arm may be rotated with respect to the pair of slidable arms in order to adjust a distance between the mounting element provided on the third arm and each other mounting element. In Fig. 4, the multi-camera system 400 is in a "folded" configuration, with the third arm rotated towards the second arm 433. In Fig. 5, the multi-camera system 400 is in a "unfolded" configuration, with the third arm rotated away from the second arm.

In some examples, in order to further improve the flexibility of the multi-camera system, the rotatable arm may have an adjustable length (e.g. the rotatable arm may be a telescopic rotatable arm) and/or the mounting element provided on the rotatable arm may be rotatable with respect to the rotatable arm.

The connecting arrangement 430 shown in Figs. 4 and 5 provides a multi-camera system that is adjustable and is structurally stable both when mounted to an external device and when not mounted to an external device. In this way, when the multi-camera system is not mounted to an external device, the multi-camera system may be folded (as shown in Fig. 4) and stored neatly.

In Figs. 4 and 5, the multi-camera system 400 comprises three cameras. However, as described above, the multi-camera system may comprise a different number of cameras (i.e. two or more cameras). The skilled person would readily appreciate how to adapt the connecting arrangement illustrated in Figs. 4 and 5 to a different number of cameras (for instance, in the case of two cameras, the connecting arrangement may comprise a pair of slidable arms but no rotatable arm, while in the case of four cameras, the connecting arrangement may comprise a pair of slidable arms and two rotatable arms).

As described above with reference to Fig. 1, the multi-camera system may further comprise one or more cables/wiring to provide an electrical connection to each camera. Where the connecting arrangement comprises a pair of slidable arms, the relevant portion of the one or more cables/wiring may be provided within the slidable arms. Where the connecting arrangement comprises at least one rotatable arm, the relevant portion of the one or more cables/wiring may be provided within the rotatable arm.

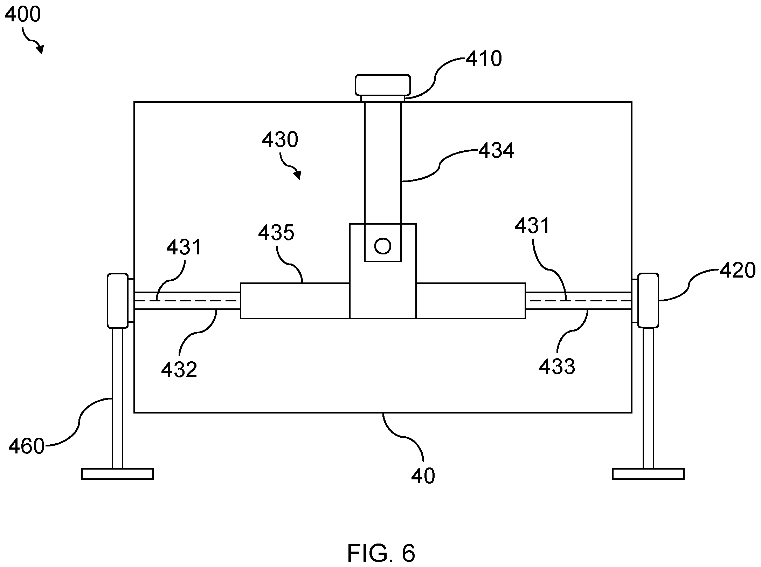

Fig. 6 illustrates a rear view of the multi-camera system 400 mounted to an external device 40.

As previously mentioned, the multi-camera system may comprise at least one support element for supporting a camera of the plurality of cameras when the plurality of cameras are engaged with an external device. In Fig. 6, two support elements 460 are provided, each supporting a respective camera mounted at the sides of the external device 40. A support element may be considered less advantageous for the camera mounted at the top of the device, as this camera may be considered sufficiently supported by the external device.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A multi-camera system (100, 200, 400), comprising:
a plurality of mounting elements (110, 210, 410), each configured to engage with an external device (10, 20, 40);
a plurality of cameras (120, 220, 420), each camera being rotatably attached to a respective mounting element; and
a connecting arrangement (130, 230, 430) for connecting the mounting elements, wherein the connecting arrangement is configured such that a distance between mounting elements is adjustable.

2. The multi-camera system (100, 200, 400) of claim 1, further comprising a control unit (140) configured to determine a position of each of the plurality of cameras (120, 220, 420) with respect to one another.

3. The multi-camera system (100, 200, 400) of claim 2, wherein the control unit (140) is configured to determine the position of each of the plurality of cameras (120, 220, 420) with respect to one another by:
receiving, from each of the plurality of cameras, at least one image (125a, 125b) acquired by the respective camera; and
processing the at least one image acquired by each camera to determine the position of each of the plurality of cameras with respect to one another.

4. The multi-camera system (100, 200, 400) of claim 3, wherein:
the control unit (140) is further configured to obtain initial position information for the plurality of cameras (120, 220, 420); and
the control unit is configured to determine the position of each of the plurality of cameras with respect to one another by processing the received at least one image (125a, 125b) acquired by each camera and the initial position information.

5. The multi-camera system (100, 200, 400) of claim 4, wherein:
the connecting arrangement (130, 230, 430) comprises at least one shunt resistor; and
the control unit (140) is further configured to:
receive a resistance measurement from each shunt resistor; and
determine the initial position information based on the resistance measurement received from each shunt resistor.

6. The multi-camera system (100, 200, 400) of claim 4 or 5, wherein:
a known spatially varying pattern is provided on, or at a fixed distance with respect to, at least one camera; and
the control unit (140) is further configured to:
receive, from at least one other camera, an image acquired by the respective camera that captures the known spatially varying pattern; and
analyze each image that captures the known spatially varying pattern to determine the initial position information.

7. The multi-camera system (100, 200, 400) of any of claims 2 to 6, wherein the control unit (140) is further configured to repeat the determination of the position of each of the plurality of cameras (120, 220, 420) with respect to one another in response to detecting a change in position of at least one of the cameras.

8. The multi-camera system (100, 200, 400) of claim 7, wherein:
the multi-camera system further comprises an inertial measurement unit provided on each camera (120, 220, 420); and
the control unit (140) is configured to:
receive, from each inertial measurement unit, a signal responsive to motion of the respective camera; and
process the received signals to detect any change in position of at least one of the cameras.

9. The multi-camera system (100, 200, 400) of any of claims 2 to 8, wherein the control unit (140) is further configured to determine an orientation of each of the plurality of cameras (120, 220, 420) with respect to one another.

10. The multi-camera system (100, 200, 400) of any of claims 2 to 9 wherein:
the multi-camera system further comprises, for each camera (120, 220, 420), a motor (150) configured to rotate the camera with respect to the respective mounting element (110, 210, 410); and
the control unit (140) is configured to control each motor.

11. The multi-camera system (100, 200, 400) of claim 10, wherein the control unit (140) is further configured to:
obtain at least one image acquired by each camera (120, 220, 420);
process the at least one image acquired by each camera to identify a position of a feature of interest; and
control at least one motor (150) according to the position of the feature of interest.

12. The multi-camera system (200, 400) of any of claims 1 to 11, wherein the connecting arrangement (230, 430) comprises at least one elastic element (231, 431).

13. The multi-camera system (400) of any of claims 1 to 12, wherein the connecting arrangement (430) comprises a pair of slidable arms (432, 433).

14. The multi-camera system (400) of claim 13, wherein the connecting arrangement (430) further comprises at least one rotatable arm (434), pivotably connected to the pair of slidable arms (432, 433).

15. The multi-camera system (100, 200, 400) of any of claims 1 to 14, wherein at least one mounting element (110, 210, 410) is configured such that a distance between the camera (120, 220, 420) rotatably attached to the mounting element and a mounting surface of the mounting element configured to engage with an external device (10, 20, 40) is adjustable.
